# EUROPEAN PATENT APPLICATION

(11) **EP 4 601 030 A1**
(43) Date of publication of application: **13.08.2025**
(21) Application number: 25153826.0
(22) Date of filing: 24.01.2025
(51) Int. Cl.: H01M 4/1391

(54) **METHOD FOR RECOVERING WASHING FLUID, DEVICE FOR RECOVERING THE SAME, AND WASHING FLUID RECOVERED THEREBY**

(30) Priority: 08.02.2024 KR 20240019934
(71) Applicant: SAMSUNG SDI CO., LTD., Yongin-si, Gyeonggi-do 17084 (KR); STM Co., Ltd., Ulsan 44953 (KR)
(72) Inventor: OH, Eunok, Yongin-si (KR); PARK, Seongin, Yongin-si (KR); PARK, Kieun, Yongin-si (KR); PARK, Ji Ho, Hwaseong-si (KR); HWANG, Young Hwan, Busan (KR); YUN, Jong Yo, Ulsan (KR); LEE, Hak Man, Yangsan-si (KR); LEE, Wonseok, Busan (KR)
(74) Representative: Marks & Clerk LLP

(57) **Abstract**

The present invention relates to a method for recovering a washing fluid, a device for recovering the same, and a washing fluid recovered thereby. More particularly, the method includes synthesizing positive electrode active material particles including a nickel-containing lithium composite oxide, injecting a first washing fluid into the positive electrode active material particles and mixing, where the first washing fluid includes a coating raw material, a precipitant, and a solvent, filtering the mixture to separate a liquid mixture, and recovering the separated liquid mixture, wherein a concentration of lithium in the recovered washing fluid is about 3500 ppm or more.

## Description

### BACKGROUND

The present disclosure herein relates to a method for recovering a washing fluid, a device for recovering the same, and a washing fluid recovered thereby.

Rechargeable lithium batteries are being used as energy storage and supply sources in various fields. The rechargeable lithium batteries are widely used as energy storage and supply sources in portable devices such as mobile phones, tablet PCs, wearable devices, laptops, digital cameras, and power tools, as well as in transportation means such as hybrid cars, electric cars, and electric boards. Recently, the application has expanded to future industrial fields such as drones, robots, and urban air mobility (UAM).

In particular, as awareness of climate change has increased and interest in the environment has deepened, an electric vehicle market has grown significantly, and the use of rechargeable lithium batteries has increased rapidly. However, since the main raw materials required for manufacturing rechargeable lithium batteries are required to be obtained from natural resources, environmental destruction and pollution inevitably occur during the collecting process of raw materials. Therefore, the development of recycling technology for raw materials is urgently needed.

Accordingly, methods for recovering valuable metals such as transition metal precursors and lithium precursors from wastes related to rechargeable lithium batteries, including discarded rechargeable lithium batteries, wastes generated in a rechargeable lithium battery manufacturing process, and waste liquids generated in the washing process of a positive electrode active material, are in the spotlight. The valuable metals recovered in this way may be recycled in the manufacturing of rechargeable lithium batteries, and research and development are actively being conducted on recycling methods that are more environmentally friendly, less costly, and capable of recovering valuable metals in a high concentration.

Methods for recovering valuable metals from discarded rechargeable lithium batteries or wastes generated in the rechargeable lithium battery manufacturing process have already been implemented in various forms. However, the conventional methods have the problem of inevitably using a large amount of alkaline solution during the recovery process. Since byproducts generated from the alkaline solution cause environmental pollution, alternatives that may replace the alkaline solution are needed.

Methods for recovering lithium precursors from waste liquids generated in the washing process of a positive electrode active material are also being implemented in various forms. The waste liquid generated during the washing process of a positive electrode active material contains a large amount of lithium. However, the conventional methods have a problem in that they require a separate process to recover lithium precursors from the waste liquid. In addition, since there is no process with a recovery ratio of about 100%, there is also a problem in that lithium loss inevitably occurs simply by creating a separate process. Therefore, an improved method for recovering lithium precursors is needed.

### SUMMARY

A task to be solved by the present invention is to provide a method for recovering a washing fluid containing lithium in a high concentration and having high quality, and a device for recovering the same.

A method for recovering a washing fluid according to an embodiment of the present invention includes synthesizing positive electrode active material particles including a nickel-containing lithium composite oxide, injecting a first washing fluid to the positive electrode active material particles and mixing, where the first washing fluid includes a coating raw material, a precipitant, and a solvent, filtering the mixture to separate a liquid mixture, and recovering the separated liquid mixture, wherein a concentration of lithium in the recovered washing fluid is about 3500 ppm or more.

A device for recovering a washing fluid according to an embodiment of the present invention includes a tank part, a valve part, a line part, and a pump part, and may recover a washing fluid using the recovering method described above.

A washing fluid according to an embodiment of the present invention may be recovered by the recovering method of a washing fluid described above.

At least some of the above and other features of the invention are set out in the claims.

### BRIEF DESCRIPTION OF THE FIGURES

The accompanying drawings are included to provide a further understanding of the present invention, and are incorporated in and constitute a part of this specification. The drawings illustrate embodiments of the present invention and, together with the description, serve to explain principles of the present invention.
FIG. 1 is a simplified conceptual diagram showing a rechargeable lithium battery according to embodiments of the present invention.
FIGS. 2 to 5 are simplified diagrams showing rechargeable lithium batteries according to embodiments, where FIG. 2 is a cylindrical battery, FIG. 3 is a prismatic battery, and FIGS. 4 and 5 are pouch-type batteries.
FIG. 6 is an enlarged view of a positive electrode active material according to an embodiment of the present invention.
FIG. 7 is a flowchart explaining a method for producing a positive electrode active material according to an embodiment of the present invention.
FIGS. 8, 9, and 10 are each a schematic diagram explaining a method for producing a positive electrode active material according to an embodiment of the present invention.
FIG. 11 is a flowchart explaining a method for recovering a washing fluid according to embodiments of the present invention.
FIG. 12 is a flowchart explaining a method for recovering a washing fluid according to a comparative example.
FIG. 13 is a schematic diagram explaining a device for recovering a washing fluid according to embodiments of the present invention.
FIG. 14 is a flowchart explaining a method for extracting a lithium precursor from a washing fluid according to an embodiment of the present invention.
FIG. 15 is a flowchart explaining a method for preparing a first solution in the above-described method for extracting a lithium precursor.

### DETAILED DESCRIPTION

In order to sufficiently understand the configuration and effect of the present invention, some embodiments of the present invention will be described with reference to the accompanying drawings. It should be noted, however, that the present invention is not limited to the following embodiments, and may be implemented in various forms. Rather, the embodiments are provided only to disclose the present invention and let those skilled in the art fully know the scope of the present invention.

In the description, it will be understood that, when an element is referred to as being on another element, the element can be directly on the other element or intervening elements may be present therebetween. In the drawings, thicknesses of some components are exaggerated for effectively explaining the technical contents. Like reference numerals refer to like elements throughout the specification.

Unless otherwise specially noted in the description, the expression of singular form may include the expression of plural form. In addition, unless otherwise specially noted, the phrase "A or B" may indicate "A but not B", "B but not A", and "A and B." The terms "comprises/includes" and/or "comprising/including" used in the description do not exclude the presence or addition of one or more other components.

As used herein, the term "combination thereof' may refer to a mixture, a stack, a composite, a copolymer, an alloy, a blend, or a reaction product.

Unless otherwise specially defined in the description, a particle diameter may be an average particle diameter. Also, a particle diameter means an average particle diameter (D50), which refers to the diameter of particles at a cumulative volume of about 50 vol% in particle size distribution. The average particle diameter (D50) may be measured by a method widely known to those skilled in the art, for example, by a particle size analyzer, or by using a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the laser scattering method, target particles are dispersed in a dispersion medium, then, introduced into a commercial laser diffraction particle-diameter measurement instrument (e.g., MT3000 of Microtrac), and irradiated with ultrasonic waves of about 28 kHz at an output of about 60 W, and the average particle diameter (D50) based on about 50% of particle diameter distribution may be calculated in the measurement instrument.

The "atomic fraction" used in the present invention may be obtained as a result of analyzing the elements on the surface of a positive electrode active material CAM using an energy dispersive spectrometer (EDX), that is, SEM-EDS. The atoms on the surface of the positive electrode active material CAM, that collide with an electron beam may emit unique specific X-rays (characteristic X-rays). By analyzing the emitted X-rays through an EDX detector, the type and content of the corresponding element may be confirmed. The content obtained may correspond to the "atomic fraction. "

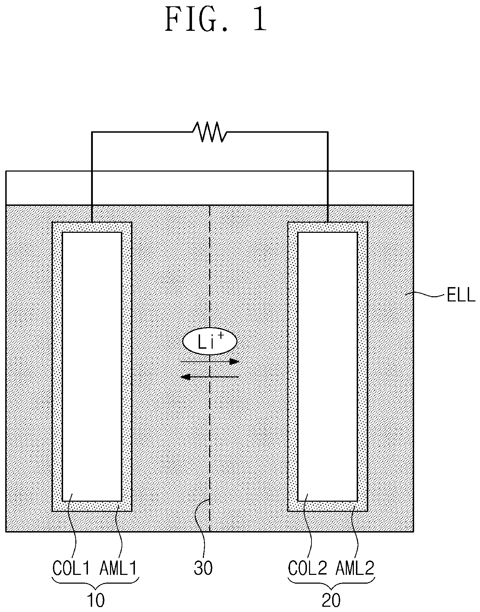

FIG. 1 is a simplified conceptual diagram of a rechargeable lithium battery according to embodiments of the present invention. Referring to FIG. 1, a rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material.

In an embodiment, the positive electrode 10 may further include an additive that may serve as a sacrificial positive electrode.

The content of the positive electrode active material in the positive electrode active material layer AML1 may range from about 90 wt% to about 99.5 wt% on the basis of about 100 wt% of the positive electrode active material layer AML1. The contents of the binder and the conductive material may be about 0.5 wt% to about 5 wt% on the basis of about 100 wt% of the positive electrode active material layer AML1.

The binder may serve to improve attachment of positive electrode active material particles to each other and also to improve attachment of the positive electrode active material to the current collector COL 1. The typical example of the binder may include polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present invention is not limited thereto.

The conductive material is used to provide an electrode with conductivity, and any suitable conductive materials without causing chemical change of a battery may be used as the conductive material to constitute the battery. The conductive material may include, for example, a carbon-based material such as natural graphite, artificial graphite, carbon black, acetylene black, Ketjen black, carbon fiber, carbon nano-fiber, and carbon nano-tube, a metal-based material with a metal powder or metal fiber type, containing copper, nickel, aluminium, silver or the like, a conductive polymer such as a polyphenylene derivative, or a mixture thereof.

Al may be used as the current collector COL1, but an embodiment of the inventive concept is not limited thereto.

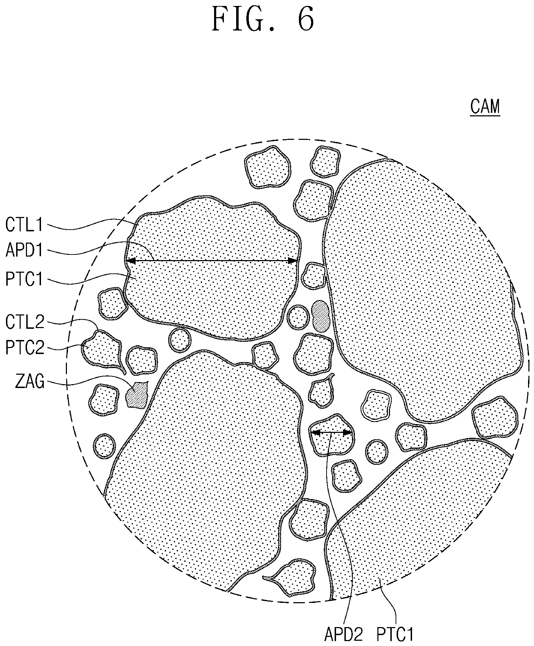

The positive electrode active material will be described in detail later with reference to FIG. 6.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material and may further include a binder and/or a conductive material.

For example, the negative electrode active material layer AMI,2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity to an electrode. Any material that does not cause chemical change and is an electron conductive material in a battery may be used. Examples of the conductive material may include: a carbon-based material such as natural graphite, artificial graphite, carbon black, acetylene black, Ketjen black, a carbon fiber, a carbon nanofiber, and carbon nanotube; a metal-based material including copper, nickel, aluminium, silver or the like, in a form of a metal powder or a metal fiber; a conductive polymer such as a polyphenylene derivative; or a mixture thereof.

The current collector COL2 may use a copper foil, a nickel foil, a stainless steel foil, a titanium foil, a nickel foam, a copper foam, a polymer substrate coated with a conductive metal, or a combination thereof.

### Negative Electrode Active Material

The negative electrode active material in the negative electrode active material layer AMI,2 may include a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be soft carbon, hard carbon, a mesophase pitch carbide product, calcined coke, and the like.

The lithium metal alloy includes an alloy of lithium with a metal selected from Na, K, Rb, Cs, Fr, Be, Mg, Ca, Sr, Si, Sb, Pb, In, Zn, Ba, Ra, Ge, Al, and Sn.

The material capable of doping into and de-doping from lithium may be a Si-based negative electrode active material or a Sn-based negative electrode active material. The Si-based negative electrode active material may include silicon, a silicon-carbon composite, SiOx (0<x<2), a Si-Q alloy (where Q is selected from an alkali metal, an alkaline earth metal, a Group 13 element, a Group 14 element (except for Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in a silicon particle form or a silicon particle coated with amorphous carbon on the surface thereof. For example, the silicon-carbon composite may include a secondary particle (core), in which primary silicon particles are assembled, and an amorphous carbon coating layer (shell) positioned on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer of two or more thereof, and may also include a mixed multilayer such as a polyethylene/polypropylene two-layer separator, a polyethylene/polypropylene/polyethylene three-layer separator, a polypropylene/polyethylene/polypropylene three-layer separator or the like.

The separator 30 may include a porous substrate and a coating layer including an organic material, an inorganic material, or a combination thereof, on one or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but an embodiment of the present invention is not limited thereto.

The organic material and the inorganic material may be mixed in one coating layer, or in a stacked form of a coating layer including an organic material and a coating layer including an inorganic material.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like.

The ester-based solvent may include methyl acetate, ethyl acetate, n-propyl acetate, dimethyl acetate, methyl propionate, ethyl propionate, decanolide, mevalonolactone, valerolactone, caprolactone, or the like.

The ether-based solvent may include dibutyl ether, tetraglyme, diglyme, dimethoxyethane, 2-methyltetrahydrofuran, 2,5-dimethyltetrahydrofuran, tetrahydrofuran, or the like. In addition, the ketone-based solvent may include cyclohexanone, or the like. The alcohol-based solvent may include ethyl alcohol, isopropyl alcohol, or the like, and the aprotic solvent may include nitriles such as R-CN (wherein R is a C2 to C20 linear, branched, or cyclic hydrocarbon group, and may include a double bond, an aromatic ring, or an ether bond); amides such as dimethylformamide; dioxolanes such as 1,3-dioxolane, and 1,4-dioxolane; sulfolanes, or the like.

The non-aqueous organic solvents may be used alone or in combination of two or more thereof.

In addition, when using a carbonate-based solvent, a cyclic carbonate and a chain carbonate may be mixed and used, and the cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves the transportation of the lithium ions between the positive electrode and the negative electrode. Typical examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato) phosphate (LiDFBOP), and lithium bis(oxalato) borate (LiBOB).

### Rechargeable Lithium Battery

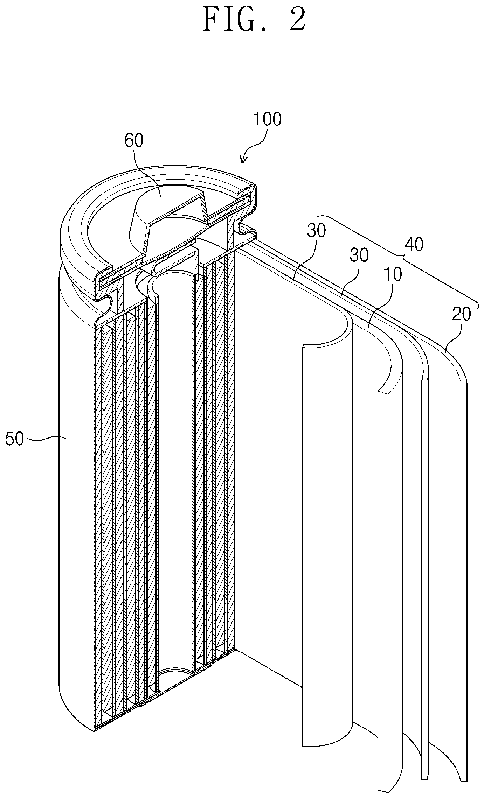

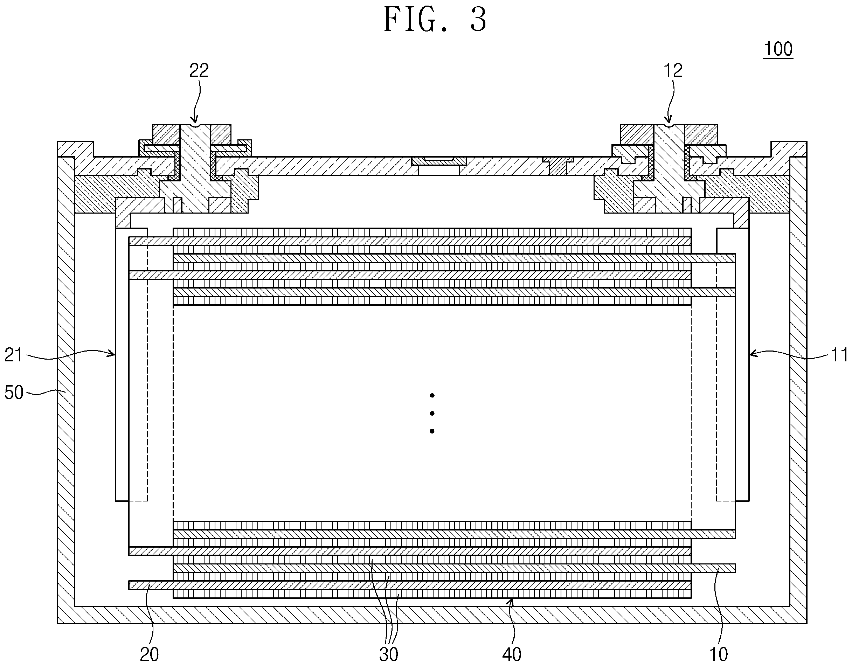

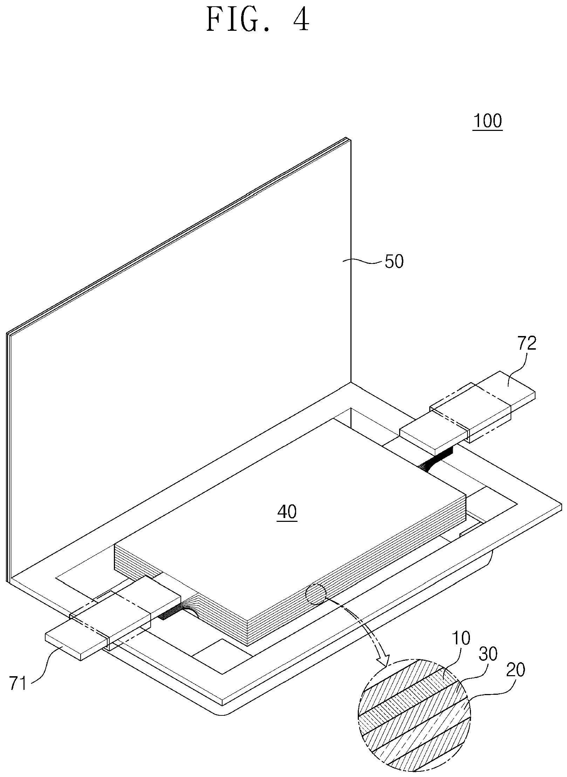

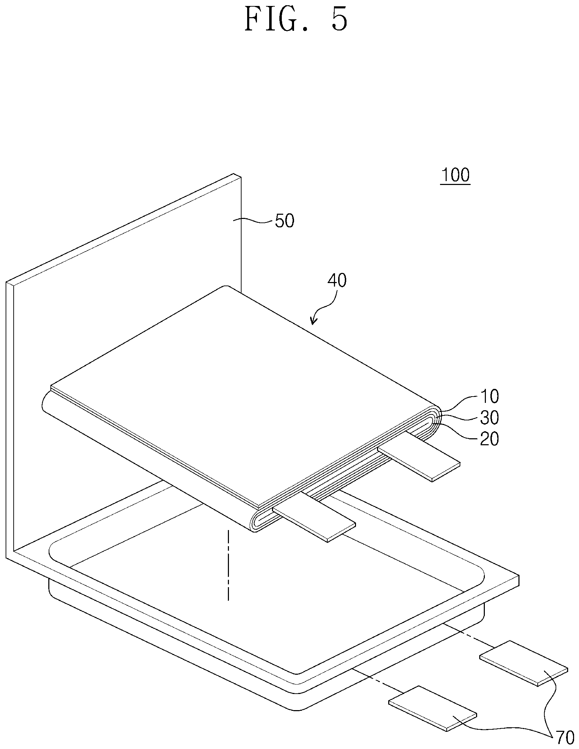

The rechargeable lithium battery may be classified into cylindrical, prismatic, pouch, or coin-type batteries depending on their shape. FIGS. 2 to 5 are schematic views illustrating rechargeable lithium batteries according to some embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 accommodating the electrode assembly 40. The positive electrode 10, the negative electrode 20, and the separator 30 may be immersed in an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4 and 5, the rechargeable lithium battery 100 may include an electrode tab 70, that is, a positive electrode tab 71 and a negative electrode tab 72, serving as an electrical path for inducing the current formed in the electrode assembly 40 to the outside.

The rechargeable lithium battery according to an embodiment of the present invention may be applied to automobiles, mobile phones, and/or various types of electric devices, but an embodiment of the present invention is not limited thereto.

### Positive Electrode Active Material

FIG. 6 is a diagram showing a positive electrode active material according to embodiments of the present invention. Referring to FIG. 6, a positive electrode active material CAM shows a powder form before being used in a positive electrode active material layer AML1 described with reference to FIG. 1.

In an embodiment of the present invention, referring to FIG. 6, the positive electrode active material CAM may include a plurality of first particles PTC1, a plurality of second particles PTC2, and a plurality of aggregates ZAG.

The first particles PTC1 may have a first average particle diameter APD1, and the second particles PTC2 may have a second average particle diameter APD2. The second average particle diameter APD2 may be smaller than the first average particle diameter APD1. For example, the first average particle diameter APD1 may be about 5 µm to about 25 µm. For example, the first average particle diameter APD1 may be about 7 µm to about 25 µm, about 10 µm to about 25 µm, about 15 µm to about 25 µm, or about 10 µm to about 20 µm. The second average particle diameter APD2 may be about 0.1 µm to about 10 µm. For example, the second average particle diameter APD2 may be about 0.1 µm to about 7 µm, about 0.5 µm to about 6 µm, or about 1 µm to about 5 µm. The "average particle diameter", i.e. D50, used in the present invention may be obtained by randomly selecting about 30 secondary particle form active materials from an electron microscope photograph of a positive electrode active material, measuring the particle diameter, and taking the diameter (D50) of the particles having a cumulative volume of 50% by volume from particle size distribution as the average particle diameter. In the present invention, the first particle PTC1 may be named as a large particle, and the second particle PTC2 may be named as a small particle.

The first and second particles PTC1 and PTC2 may have a granular or spherical shape. In an embodiment of the present invention, the first particle PTC1 may have a secondary particle form in which primary particles are aggregated. In an embodiment of the present invention, the second particle PTC2 may have a single particle form. The single particle form may include a primary particle form, or a secondary particle form in which several primary particles are aggregated. The single particle form may include one crystal grain or several crystal grains. The crystal grain may be the smallest unit in which a lithium composite oxide has one crystal direction. For example, the second particle PTC2 may include one primary particle and/or one single particle in which multiple primary particles are combined into one.

The positive electrode active material CAM according to embodiments of the present invention may have a bimodal form including large particles (e.g., PTC1) and small particles (e.g., PTC2), having different average particle diameters. The integration density of the positive electrode active material CAM may be improved by the small particles filling the gaps between the large particles. In other words, the positive electrode active material CAM according to embodiments of the present invention may have a relatively high energy density per unit volume.

In an embodiment, the first particles PTC1 and the second particles PTC2 in the positive electrode active material CAM may have a weight ratio of about 95:5 to about 50:50. In another embodiment, the first particles PTC1 and the second particles PTC2 in the positive electrode active material CAM may have a weight ratio of about 5:95 to about 50:50. For example, the weight of the first particles PTC1 in the positive electrode active material CAM may be greater than the weight of the second particles PTC2.

The first particle PTC1 may include a first lithium composite oxide, and the second particle PTC2 may include a second lithium composite oxide. Each of the first and second lithium composite oxides may include nickel (Ni). In an embodiment, each of the first and second lithium composite oxides may further include at least one metal selected from the group consisting of cobalt (Co), manganese (Mn) and aluminium (Al).

For example, the first lithium composite oxide may be represented by Chemical Formula 1 below.

[Chemical Formula 1] Liₐ₁Niₓ₁M¹_{y1}M²_{z1}O_{2-b1}X_{b1}

In Chemical Formula 1, 0.9≤a1≤1.8, 0.8≤x1≤1, 0≤y1≤0.2, 0≤z1≤0.2, 0.9≤x1+y1+z1≤1.1, and 0≤b1≤0.1, M¹ and M² are each independently one or more elements selected from the group consisting of Al, B, Ba, Ca, Ce, Co, Cr, Cu, Fe, Mg, Mn, Mo, Nb, Si, Sr, Ti, V, W, and Zr, and X is one or more elements selected from the group consisting of F, P and S.

In Chemical Formula 1, for example, 0.85≤x1≤1, 0≤y1≤0.15, and 0≤z1≤0.15, or0.9≤x1≤1, 0≤y1≤0.1, and 0≤z1≤0.1.

The second lithium composite oxide may be represented by Chemical Formula 2 below.

[Chemical Formula 2] Liₐ₂Niₓ₂M³_{y2}M⁴_{z2}O_{2-b2}X_{b2}

In Chemical Formula 2, 0.9≤a2≤1.8, 0.8≤x2≤1, 0≤y2≤0.2, 0≤z2≤0.2, 0.9≤x2+y2+z2≤1.1, and 0≤b2≤0.1, M³ and M⁴ are each independently one or more elements selected from the group consisting of Al, B, Ba, Ca, Ce, Co, Cr, Cu, Fe, Mg, Mn, Mo, Nb, Si, Sr, Ti, V, W, and Zr, and X is one or more elements selected from the group consisting of F, P and S.

In Chemical Formula 2, for example, 0.85≤x2≤1, 0≤y2≤0.15, and 0≤z2≤0.15, or 0.9≤x2≤1. 0≤y2≤0.1, and 0≤z2≤0.1.

M¹ and M² of the first lithium composite oxide and the ratio of the elements constituting them may be different from M³ and M⁴ of the second lithium composite oxide and the ratio of the elements constituting them. For example, M¹ and M² of the first lithium composite oxide may include Co and Al, and M³ and M⁴ of the second lithium composite oxide may include Co and Mn. In another embodiment, M¹ and M², and M³ and M⁴ may each include Co, Al, and Mn.

In an embodiment of the present invention, x1, which is a molar ratio of Ni in Chemical Formula 1, may be greater than about 0.8. For example, x1 may be about 0.88 or more. If the first lithium composite oxide has a high nickel content composition (x1>0.8), the calcining of the first lithium composite oxide may be performed at a relatively low temperature. Accordingly, in the production process of the positive electrode active material for a rechargeable lithium battery, described later, the first particles PTC1 may be synthesized at a relatively low temperature. Ni in the first lithium composite oxide may affect the output and capacity of a rechargeable lithium battery. The present invention may provide a high output rechargeable lithium battery by using the first lithium composite oxide having a high nickel content composition. The molar ratio of Ni in Chemical Formula 2, x2, may also be greater than 0.8. For example, x2 may be 0.88 or more. However, x2 may be different from x1.

As the content of Ni in the first and second lithium composite oxides increases, the stability of the positive electrode or the rechargeable battery may deteriorate. In an embodiment of the present invention, the first and second lithium composite oxides may further include Co, thereby effectively suppressing the collapse of a structure due to repeated charge and discharge, thereby improving life characteristics at room temperature and high temperature and improving the stability and capacity retention characteristics of the rechargeable battery.

In an embodiment of the present invention, the first particle PTC1 may include a first coating layer CTL1 provided on the surface thereof. The second particle PTC2 may include a second coating layer CTL2 provided on the surface thereof. Each of the first coating layer CTL1 and the second coating layer CTL2 may include cobalt (Co). Each of the first coating layer CTL1 and the second coating layer CTL2 may be derived from a coating agent described later. By the first coating layer CTL1, Co may be detected in the first particle PTC1 as a result of the SEM-EDS analysis. By the second coating layer CTL2, Co may be detected in the second particle PTC2 as a result of the SEM-EDS analysis.

For example, each of the first coating layer CTL1 and the second coating layer CTL2 may include a cobalt (Co)-containing compound. The cobalt-containing compound may be, for example, cobalt oxide, cobalt hydroxide, cobalt carbonate, a composite thereof, or a mixture thereof. In addition, the cobalt-containing compound may further include other metal or non-metal elements in addition to cobalt. For example, the cobalt-containing compound may further include lithium, manganese, and/or nickel. For example, the cobalt-containing compound may be lithium cobalt oxide or the like.

The content of cobalt in the first coating layer CTL1 with respect to the total amount of nickel and cobalt may be about 55 at% to about 70 at%, for example, about 55 at% to about 68 at%, about 55 at% to about 65 at%, about 55 at% to about 63 at%, about 57 at% to about 70 at%, about 59 at% to about 70 at%, about 60 at% to about 70 at%, about 60 at% to about 65 at%, or about 61 at% to about 63 at%. If the cobalt coating content of the first particle PTC1 satisfies the above range, coating unevenness between particles may be resolved, and a uniform coating may be formed on the surface of the first particle PTC1, so that gas generation may be suppressed and initial charge/discharge efficiency and long-term life characteristics may be improved.

The content of cobalt in the second coating layer CTL2 with respect to the total amount of nickel and cobalt may be about 39 at% to about 45 at%, for example, about 39 at% to about 44 at%, about 39 at% to about 43 at%, about 39 at% to about 42 at%, about 40 at% to about 45 at%, or about 41 at% to about 45 at%. If the cobalt coating content of the second particle PTC2 satisfies the above range, the coating unevenness between the particles may be resolved, excessive coating on the second particle PTC2 may be suppressed, and uniform coating may be induced, so that the resistance may be reduced and the initial charge/discharge efficiency and long-term life characteristics may be improved.

The first coating layer CTL1 may be a layer that uniformly or non-uniformly covers the surface of the first particle PTC1. If the first coating layer CTL1 covers the surface of the first particle PTC1 non-uniformly, the first coating layer CTL1 may have an island shape. However, the first coating layer CTL1 may not be confirmed by an image using an electron microscope. The first coating layer CTL1 may be confirmed by the presence of cobalt (Co) in the first particle PTC1 using SEM-EDS. The second coating layer CTL2 may also be substantially the same as described in the first coating layer CTL1.

The shape, structure, and composition of the particles constituting the positive electrode active material CAM may be confirmed through time-of-flight secondary ion mass spectrometry (TOF-SIMS) for the positive electrode active material CAM according to embodiments of the present invention.

TOF-SIMS equipment is SIMS equipment equipped with a mass spectrometer, TOF. Specifically, SIMS equipment is equipment that may obtain the chemical composition and surface structure of a material by analyzing the ions (positive or negative ions) emitted during the collision of the primary ions with the surface of an analyte. According to TOF-SIMS analysis, Co may not be detected inside each of the first and second particles PTC1 and PTC2 according to the present invention. That is, the presence of Co in the particles PTC1 and PTC2 of the present invention may be indirectly confirmed through the form of the coating layers CTL1 and CTL2 on the surfaces thereof.

As described above, the first particles PTC1 may have a secondary particle form. In this case, micro-cracks may be formed inside the secondary particles during charging and discharging of a battery, and a side reaction between the electrolyte (see ELL of FIG. 1) and the positive electrode active material CAM may be promoted, thereby generating gas inside the battery. Accordingly, the stability and lifespan of a rechargeable battery may be reduced.

According to embodiments of the present invention, the second particles PTC2 may have a single particle form. The second particles PTC2 may have higher durability and may be denser than the first particles PTC1. Therefore, the formation of micro-cracks inside the second particles PTC2 may be prevented. As a result, the stability and capacity retention characteristics of the rechargeable battery according to the present invention may be improved.

The aggregate ZAG may be provided in the space between the first and second particles PTC1 and PTC2. The aggregate ZAG may be derived from a coating agent described later. The agglomerate ZAG may contain zirconium (Zr). More specifically, the agglomerate ZAG may contain zirconia. For example, the agglomerate ZAG may be a lump formed by agglomeration of a portion of the coating agent that is not coated on the surfaces of the first and second particles PTC1 and PTC2.

In another embodiment of the present invention, the positive electrode active material CAM may include a plurality of first particles PTC1. For example, the positive electrode active material CAM may include a plurality of aggregates ZAG in addition to the plurality of first particles PTC1.

In another embodiment of the present invention, the positive electrode active material CAM may include a plurality of second particles PTC2. For example, the positive electrode active material CAM may include a plurality of aggregates ZAG in addition to the plurality of second particles PTC2.

### Method for Producing Positive Electrode Active Material

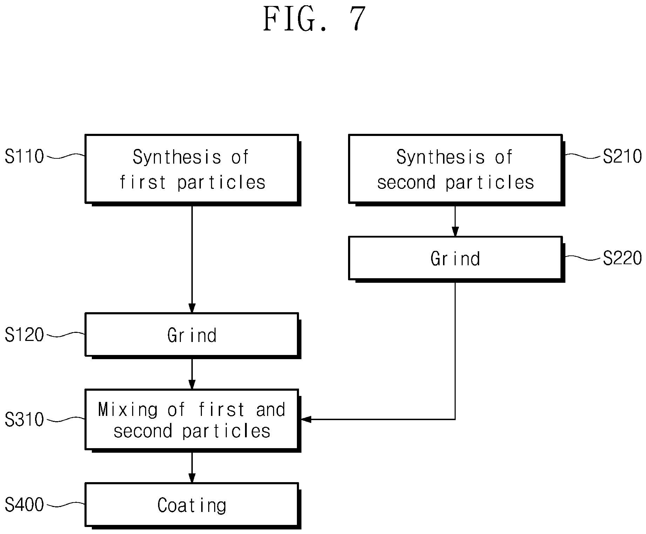

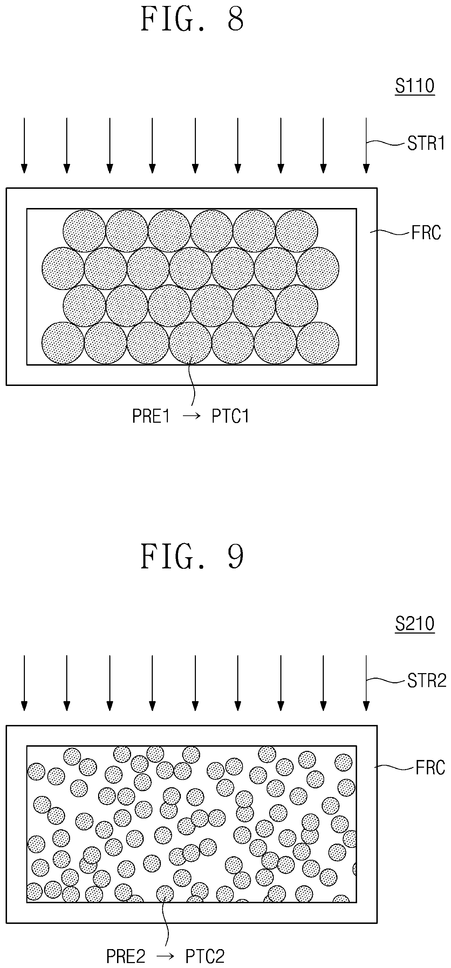

FIG. 7 is a flowchart showing a method showing a method for producing a positive electrode active material according to embodiments of the present invention. FIGS. 8 to 10 are schematic diagrams showing a method for producing a positive electrode active material of FIG. 7.

Referring to FIGS. 7 and 8, first particles PTC1 may be synthesized (S1 10). A method for synthesizing the first particles PTC1 will be specifically described. First, a first precursor PRE1 may be prepared. The first precursor PRE1 may include Ni, M¹, and M² of Chemical Formula 1 described above. M¹ and M² may each independently be at least one element selected from the group consisting of Al, B, Ba, Ca, Ce, Co, Cr, Cu, Fe, Mg, Mn, Mo, Nb, Si, Sr, Ti, V, W, and Zr.

In an embodiment, the first precursor PRE1 may be obtained through a co-precipitation method. For example, the co-precipitation method may include dissolving a transition metal raw material in a solvent such as distilled water, and continuously introducing a transition metal salt solution into a reactor together with a chelating agent and an alkaline aqueous solution to arise precipitation. After collecting the precipitate in the form of a slurry, the slurry solution may be filtered and dried to obtain the first precursor PRE1 which is a metal composite oxide.

In the present invention, the transition metal raw material may include a metal salt of at least one element selected from the group consisting of Ni, Al, B, Ba, Ca, Ce, Co, Cr, Cu, Fe, Mg, Mn, Mo, Nb, Si, Sr, Ti, V, W, and Zr. The metal salt may include a sulfate, a nitrate, an acetate, a halide, a hydroxide, and the like, and is not particularly limited as long as it may be dissolved in a solvent. The transition metal raw material according to the present embodiments may include a nickel salt, a cobalt salt, and an aluminium salt. The transition metal raw material may be mixed by adjusting the molar ratio so that the positive electrode active material may have high capacity characteristics. For example, x1 in Chemical Formula 1 may be determined by the molar ratio.

The first precursor PRE1 may be mixed with a lithium raw material at a certain ratio to form a mixture. For example, the first precursor PRE1 and the lithium raw material may be mixed at a molar ratio of about 1:1. The lithium raw material is not particularly limited as long as it is a material commonly used in the production of positive electrode active materials. For example, the lithium raw material may include a lithium salt such as lithium carbonate, lithium nitrate, lithium hydroxide, and lithium sulfate.

The mixture may be put into a furnace FRC and a first calcining process STR1 may be performed at a first temperature. The first temperature may be about 700 °C to about 1,000 °C. More specifically, the first temperature may be about 900 °C to about 1,000 °C. The first calcining process STR1 may be performed in an oxidizing atmosphere such as air and oxygen. The heat treatment time of the first calcining process STR1 may be about 10 to about 30 hours. In another embodiment of the present invention, a preliminary calcining may be additionally performed at about 150 °C to about 800 °C before the first calcining process STR1.

Through the first calcining process STR1, the first particles PTC1 may be formed from the mixture including the first precursor PRE1 and the lithium raw material. A grinding process may be performed on the synthesized first particles PTC1 (S120). The ground first particles PTC1 may have a first average particle diameter APD1 described in FIG. 6.

Referring to FIGS. 7 and 9, the second particles PTC2 may be synthesized (S210). A method for synthesizing the second particles PTC2 will be specifically described. First, a second precursor PRE2 may be prepared. The second precursor PRE2 may include Ni, M³, and M⁴ of Chemical Formula 2 described above. M³ and M⁴ may each independently include at least one element selected from the group consisting of Al, B, Ba, Ca, Ce, Co, Cr, Cu, Fe, Mg, Mn, Mo, Nb, Si, Sr, Ti, V, W, and Zr.

In an embodiment, the second precursor PRE2 may be obtained by a method substantially the same as or similar to that of the first precursor PRE1. However, the average particle diameter of the second precursor PRE2 may be formed to be smaller than the average particle diameter of the first precursor PRE1.

The second precursor PRE2 may be mixed with a lithium raw material at a certain ratio to form a mixture. The mixture may be put into a furnace FRC and a second calcining process STR2 may be performed at a second temperature. The second temperature may be about 700 °C to about 1,000 °C. More specifically, the second temperature may be about 700 °C to about 800 °C. In an embodiment, the second temperature may be lower than the first temperature. The description of the second calcining process STR2 may be the same as or similar to the first calcining process STR1 described above.

Through the second calcining process STR2, the second particles PTC2 may be formed from the mixture including the second precursor PRE2 and the lithium raw material. A grinding process may be performed on the synthesized second particles PTC2 (S220). The ground second particles PTC2 may have a second average particle diameter APD2 described in FIG. 6.

Referring to FIG. 7, the first particles PTC1 and the second particles PTC2 may be mixed with each other (S310). In an embodiment, the first particles PTC1 and the second particles PTC2 may be mixed in a weight ratio of about 95:5 to about 50:50. In another embodiment, the first particles PTC1 and the second particles PTC2 may be mixed in a weight ratio of about 5:95 to about 50:50. By mixing the first particles PTC1 and the second particles PTC2, having different average particle diameters, a bimodal type positive electrode active material may be prepared. The first and second particles PTC1 and PTC2 may be washed and dried.

In an embodiment, the mixing step (S310) of the first particles PTC1 and the second particles PTC2 may be omitted. That is, the first particles PTC1 and the second particles PTC2 may be independently subjected to a coating process described below. As a result, a positive electrode active material CAM including a plurality of first particles PTC1 may be produced, or a positive electrode active material CAM including a plurality of second particles PTC2 may be produced.

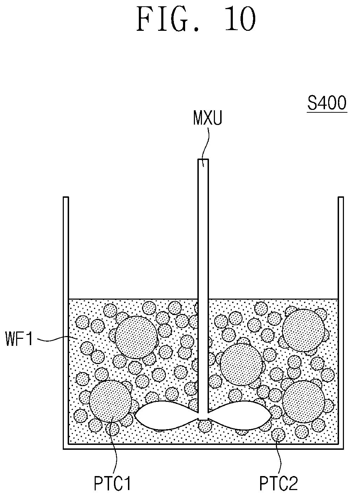

Referring to FIGS. 7 and 10, a coating process may be performed on the first and second particles PTC1 and PTC2 (S400). The coating process may include coating cobalt (Co) on the surfaces of the first and second particles PTC1 and PTC2. Specifically, the first and second particles PTC1 and PTC2, and a first washing fluid WF1 may be mixed. The first washing fluid WF1 may include a coating raw material, a precipitant (or a pH adjuster), a solvent or the like. The coating raw material may be a cobalt compound. For example, the cobalt compound may include cobalt sulfate, but is not particularly limited thereto. The precipitant (or pH adjuster) may include sodium hydroxide (NaOH) or the like. The solvent may include distilled water, an alkaline solution or the like.

The first and second particles PTC1 and PTC2 and the coating raw material may be uniformly mixed through a stirrer MXU. Then, the first and second particles PTC1 and PTC2 may be filtered and dried, and then surface treatment may be performed on the first and second particles PTC1 and PTC2. The surface treatment may be performed by putting the mixture into a furnace FRC and performing a third calcining process at a third temperature. For example, the third temperature may be about 500 °C to about 800 °C. More specifically, the third temperature may be about 700 °C to about 800 °C. The third calcining process may be performed in an oxidizing atmosphere such as air and oxygen. The heat treatment time of the third calcining process may be about 10 to about 30 hours. As a result, the positive electrode active material CAM according to embodiments of the present invention described with reference to FIG. 6 may be produced.

### Washing Fluid and Recovering Method Thereof

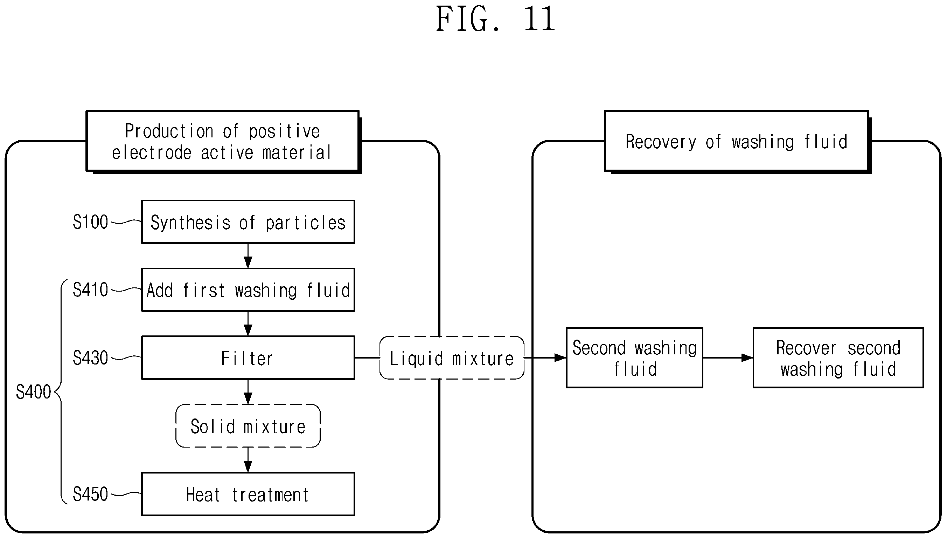

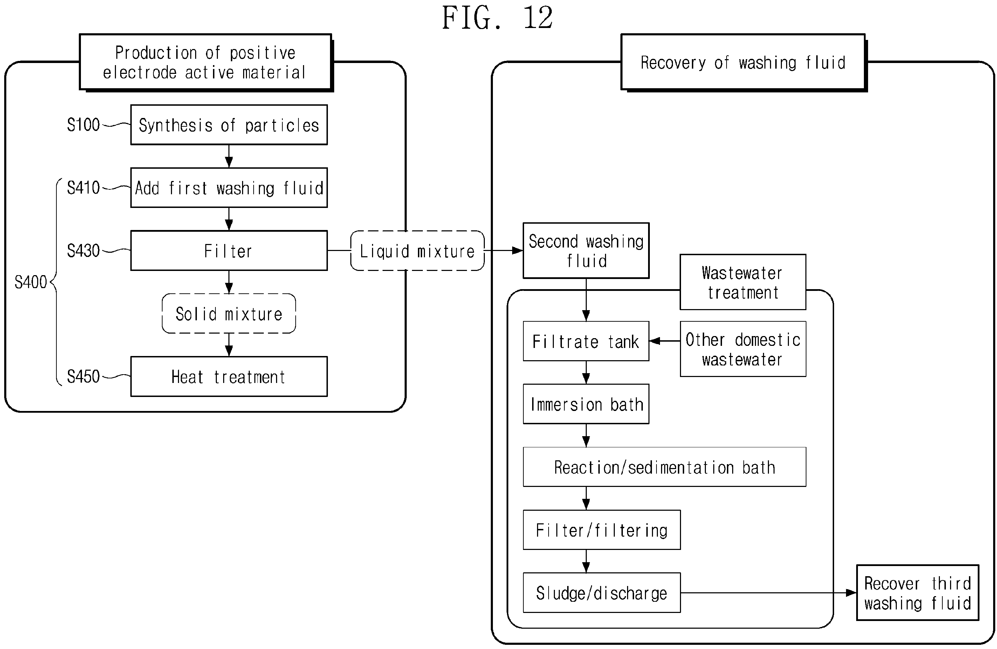

FIG. 11 is a flowchart explaining a washing fluid and a recovering method thereof according to embodiments of the present invention. FIG. 12 is a flowchart explaining a washing fluid and a recovering method thereof according to a comparative example.

Referring to FIG. 11, the washing fluid according to embodiments of the present invention may be recovered in the producing process of a positive electrode active material including a lithium composite oxide having a high nickel content and a cobalt coating layer. A lithium composite oxide having a high nickel content may mean, for example, a lithium composite oxide having a nickel content of about 80 mol% or more, or about 88 mol% or more among metals excluding lithium. That is, x1 or x2 is 0.8 or more, or 0.88 or more among the lithium composite oxides described above.

In an embodiment, the method for producing a positive electrode active material may include the method for producing a positive electrode active material, described above with reference to FIG. 7. For example, the method for producing a positive electrode active material may include: synthesizing particles including a lithium composite oxide having a high nickel content; mixing the particles with a first washing fluid; filtering the mixture; and heat-treating a solid mixture in the filtered mixture.

The step of synthesizing particles including a lithium composite oxide having a high nickel content (S100) may, for example, include synthesizing the first particles PTC1 or the second particles PTC2 described above. In an embodiment, the particles may include lithium byproducts remaining on the surface.

A first washing fluid WF1 is added to the particles and mixed (S410). The first washing fluid WF1 includes the coating raw material, precipitant (or a pH adjuster), and solvent described above. The coating raw material may be a cobalt compound. For example, the cobalt compound may include cobalt sulfate, but is not particularly limited thereto. The precipitant (or pH adjuster) may include sodium hydroxide (NaOH) or the like. The solvent may include distilled water, an alkaline solution or the like.

In this step, residual lithium byproducts on the surface of the particles may be removed.

In addition, in this step, a coating layer may be formed on the surface of the particles. Lithium byproducts may also be produced in this coating step. The lithium byproducts may be lithium byproducts remaining on the surfaces of the particles and/or the coating layer. The lithium byproducts may also be removed in this step.

In order to remove the residual lithium byproducts, this step may additionally include adding water.

The mixture produced in this step may include a solid mixture and a liquid mixture. The liquid mixture may additionally contain sodium hydroxide as well as distilled water, an alkaline solution or the like.

The mixture is filtered (S430). Before heat-treating the particles, the liquid mixture may be removed through this step, and only a solid mixture may be separated. In this specification, the liquid mixture may be referred to as a second washing fluid.

The separated solid mixture may be heat treated (S450). That is, this step may include the surface treatment described above. The mixture may be added to a furnace FRC and a third calcining process may be performed at a third temperature. For example, the third temperature may be about 500 °C to about 800 °C. More specifically, the third temperature may be about 700 °C to about 800 °C. The third calcining process may be performed in an oxidizing atmosphere such as air and oxygen. The heat treatment time of the third calcining process may be about 10 hours to about 30 hours. Thus, the positive electrode active material CAM according to embodiments of the present invention described with reference to FIG. 6 may be produced.

The washing fluid according to embodiments of the present invention may include the second washing fluid discharged in the filtering step (S430) of the mixture. The washing fluid according to embodiments of the present invention may be the recovered second washing fluid.

The washing fluid according to embodiments of the present invention may include lithium (Li) in a high concentration. For example, the concentration of lithium (Li) in the washing fluid is about 3500 ppm or more. For example, the concentration of lithium (Li) in the washing fluid may be about 3500 ppm to about 10000 ppm, or about 3500 ppm to about 5000 ppm.

The washing fluid according to embodiments of the present invention may not include impurities. Alternatively, the washing fluid according to embodiments of the present invention may include a trace amount of impurities. For example, the impurities may include sodium (Na), potassium (K), magnesium (Mg), calcium (Ca), chlorine (Cl), sulfate (SO₄) or the like. For example, the concentration of impurities in the washing fluid may be about 30,000 ppm or less. For example, the concentration of impurities in the washing fluid may be about 20 ppm to about 30,000 ppm. For example, the concentration of sulfate (SO₄) in the washing fluid may be about 30,000 ppm or less, or about 10 ppm to about 30,000 ppm, respectively.

For example, the components and contents of the washing fluid may be confirmed through an inductively coupled plasma (ICP) analysis method.

Referring to FIG. 12, the washing fluid according to a comparative example may be the second washing fluid including a third washing fluid discharged after conducting wastewater treatment process described later. The washing fluid according to a comparative example may be the recovered third washing fluid.

The wastewater treatment process may be performed through a wastewater treatment device. For example, the wastewater treatment device may include a filtrate tank, an immersion bath, a sedimentation bath, a filter part, a sludge discharge part or the like. Other domestic wastewater or the like may be introduced into the filtrate tank. The second washing fluid may be discharged through the wastewater treatment device described above as the third washing fluid.

The washing fluid according to the comparative example may contain lithium (Li) in a low concentration. For example, the concentration of lithium (Li) in the washing fluid according to the comparative example may be less than about 3500 ppm, or about 1000 ppm to about 3000 ppm. In addition, the washing fluid according to the comparative example may contain excessive impurities. For example, the impurities may include sodium (Na), sulfate (SO₄) or the like. For example, the concentration of impurities in the washing fluid may be greater than about 30000 ppm. For example, the concentration of sodium (Na) in the washing fluid may greater than about 1000 ppm, or about 1000 ppm to about 90000 ppm. For example, the concentration of potassium (K) in the washing fluid may be greater than about 10,000 ppm, or from about 10,000 ppm to about 30,000 ppm. For example, the concentration of magnesium (Mg) in the washing fluid may be greater than about 5,000 ppm, or from about 5,000 ppm to about 20,000 ppm. For example, the concentration of chlorine (Cl) in the washing fluid may be greater than about 100,000 ppm, or from about 100,000 ppm to about 200,000 ppm. For example, the concentration of sulfate (SO₄) in the washing fluid may be greater than about 30,000 ppm, or from about 30,000 ppm to about 300,000 ppm.

The washing fluid according to embodiments of the present invention may have the effects below by omitting the wastewater treatment process described above. The washing fluid according to embodiments of the present invention may contain lithium of a high concentration. In addition, the washing fluid according to embodiments of the present invention may provide a high quality washing fluid by not containing impurities or containing a trace amount of impurities. Lithium may be recovered more economically and easily using the washing fluid according to embodiments of the present invention. The recovered lithium may be recycled in a rechargeable lithium battery.

### Recovery Device of Washing Fluid

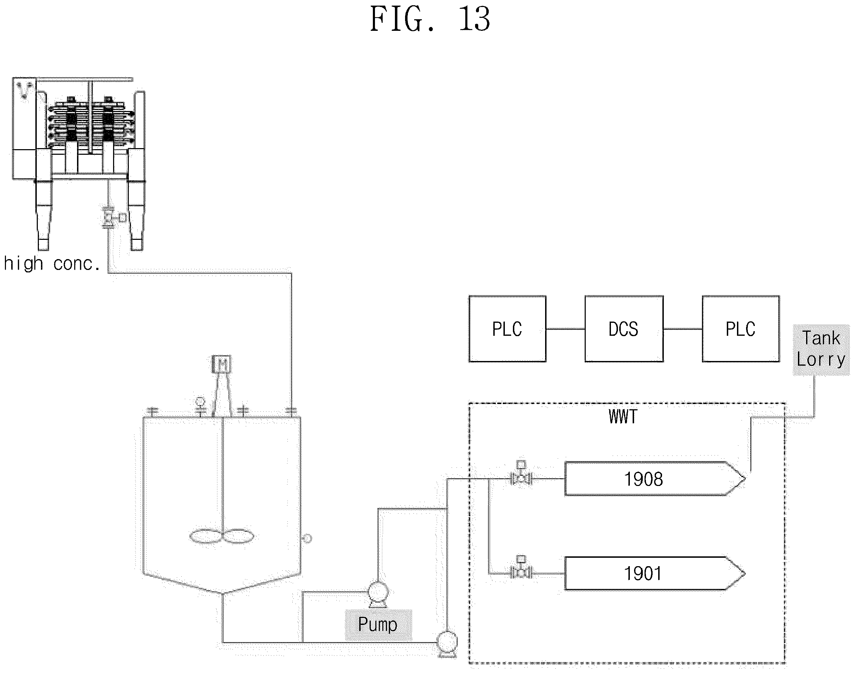

FIG. 13 is a schematic diagram for explaining a recovery device of washing fluid according to embodiments of the present invention. Referring to FIG. 13, the recovery device of washing fluid according to embodiments of the present invention may include an additional tank part, a valve part, a line part, a pump part or the like.

### Utilization of Washing Fluid

A lithium precursor may be recovered using the washing fluid according to embodiments of the present invention. The recovered lithium precursor may be used again as a raw material for producing a positive electrode active material.

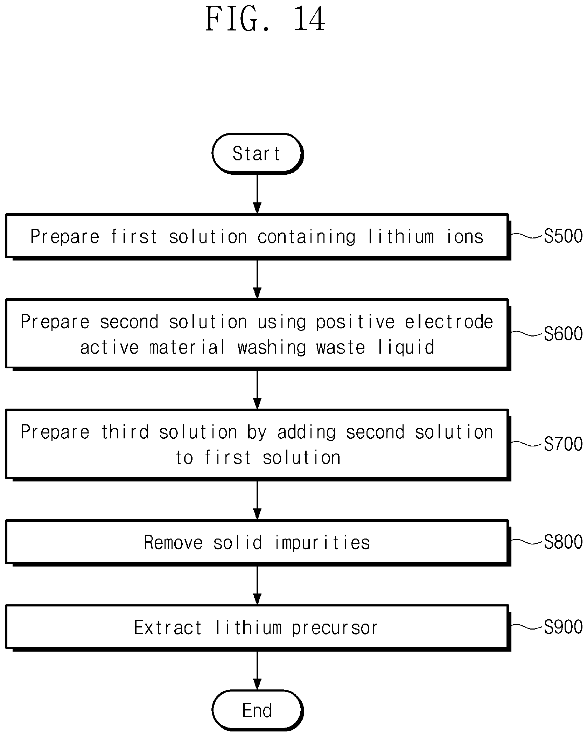

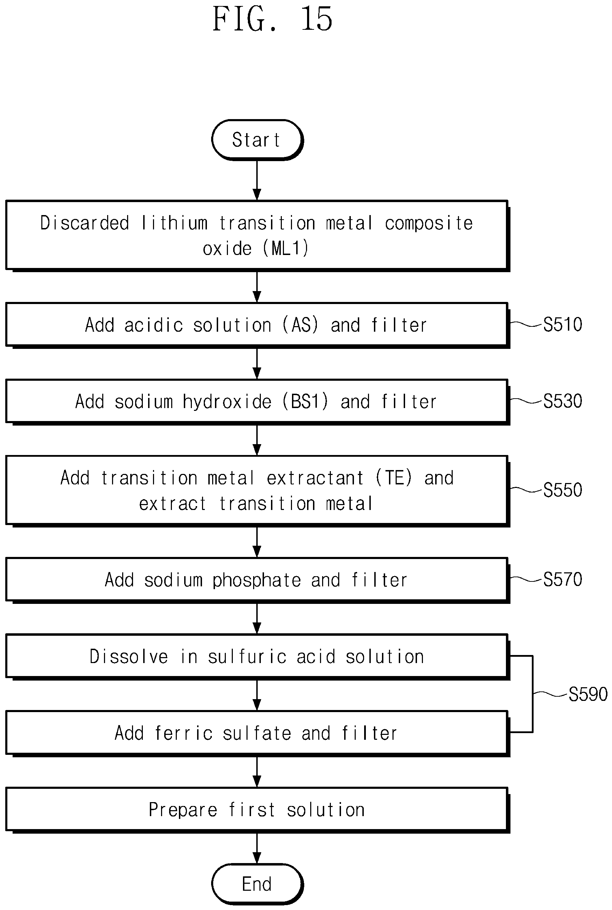

FIG. 14 is a flowchart explaining a method for recovering a lithium precursor according to an embodiment of the present invention. FIG. 15 is a flowchart explaining a method for producing a first solution.

Referring to FIG. 14, a method for extracting a lithium precursor may include: preparing a first solution containing lithium ions (S500); preparing a second solution using waste liquid generated in a positive electrode active material washing process (S600); preparing a third solution by adding the second solution to the first solution (S700); removing precipitated solid impurities (S800); and extracting a lithium precursor (S900). Finally, a lithium precursor may be extracted from the waste liquid generated in the positive electrode active material washing process and a discarded lithium transition metal composite oxide. In this case, the second solution may include the washing fluid according to embodiments of the present invention.

Referring to FIG. 15, the method for preparing the first solution from a discarded lithium transition metal composite oxide (MI,1) may include: adding the discarded lithium transition metal composite oxide (ML1) to an acidic solution (AS) and then filtering to remove undissolved solids (S510); adding sodium hydroxide (NaOH) (BS1) and then filtering to remove precipitates (S530); adding a transition metal extractant (TE) and extracting a transition metal (S550); adding sodium phosphate (Na₃PO₄) and then filtering to obtain precipitated lithium phosphate (Li₃PO₄) (S570); dissolving the lithium phosphate in a sulfuric acid solution (S590); and adding ferric sulfate (Fe₂(SO₄)₃) and then filtering to remove precipitated iron phosphate (FePO₄) (S590). Finally, the first solution including lithium ions may be prepared from the discarded lithium transition metal composite oxide (ML1).

The discarded lithium transition metal composite oxide (ML1) may be derived from a powder obtained by crushing a discarded rechargeable lithium battery or a waste generated in a rechargeable lithium battery manufacturing process. In an embodiment, the discarded lithium transition metal composite oxide (ML1) may include a compound of Chemical Formula 3 below.

[Chemical Formula 3] LiM1ₐM2_{b}M3_{c}M4_{d}O₂

In Chemical Formula 3, 0≤a≤1, 0≤b≤1, 0≤c≤1, 0≤d≤1, and a+b+c+d=1. Each of M1, M2, M3, and M4 in Chemical Formula 3 may be an element selected from Ni, Co, Al, Cu, Mn, Ti, Mo, Zn, Zr, Si, Ge, V, Cr, B, Mg, Na, Sr, Ag, Nb, Ga, Ca, or Ba.

The discarded lithium transition metal composite oxide (ML1) may be an NCA-based oxide including nickel (Ni), cobalt (Co), and aluminium (Al), or an NCM-based oxide including nickel (Ni), cobalt (Co), and manganese (Mn).

Among the materials that may be the raw materials of the discarded lithium transition metal composite oxide (ML1), the powder obtained by crushing the discarded rechargeable lithium battery may be obtained by crushing, heat-treating, and sorting the discarded rechargeable lithium battery. The powder obtained by crushing the discarded rechargeable lithium battery may include materials derived from a positive electrode, a negative electrode, a separator, and an electrolyte. In an embodiment, the material derived from the positive electrode may be aluminium (Al). The material derived from the negative electrode may be copper (Cu).

Among the materials that may be the raw materials of the discarded lithium transition metal composite oxide (ML1), the waste generated in the rechargeable lithium battery manufacturing process may be materials derived by crushing, heat-treating, and sorting a positive electrode active material and/or a positive electrode. Alternatively, the waste generated in the rechargeable lithium battery manufacturing process may be materials derived by solid-liquid separation and heat-treatment of a positive electrode slurry. The waste generated in the rechargeable lithium battery manufacturing process may include materials derived from a positive electrode active material, a positive electrode, and a positive electrode slurry. In an embodiment, the material derived from the positive electrode active material may be nickel (Ni).

The acidic solution (AS) may include at least one selected from the group consisting of sulfuric acid (H₂SO₄), hydrochloric acid (HCl), nitric acid (HNO₃), and phosphoric acid (H₃PO₄). If the acidic solution (AS) is added, hydrogen peroxide (H₂O₂) and/or sulfur dioxide (SO₂) may be added together to promote the dissolution of the transition metal.

The addition of sodium hydroxide (BS1) may be performed in a pH range where manganese (Mn), cobalt (Co), and nickel (Ni) are not easily precipitated. In an embodiment, if the amount of sodium hydroxide added is adjusted so that the pH is in a range of about 3 to about 4, manganese (Mn), cobalt (Co), and nickel (Ni) may be maintained in an ionic form, while iron (Fe) may be precipitated as Fe(OH)₃.

The precipitate formed after adding sodium hydroxide (BS1) may include elements other than manganese (Mn), cobalt (Co), and nickel (Ni) in the transition metal. In an embodiment, the precipitate may include iron (Fe), aluminium (Al), copper (Cu), zinc (Zn), magnesium (Mg), and/or calcium (Ca). The precipitate may include divalent and/or trivalent transition metals other than manganese (Mn), cobalt (Co), and nickel (Ni). In an embodiment, the precipitate may include aluminium hydroxide (Al(OH)₃) and/or copper hydroxide (Cu(OH)₂).

The filtering of the precipitate formed after adding sodium hydroxide (BS1) may be performed using a solid-liquid separation device such as a filter, a filter press, or a decanter (centrifuge).

Even after adding sodium hydroxide (BS1) and removing the precipitate through filtration, transition metal elements that have not yet been precipitated may still be included. In an embodiment, small amounts of aluminium (Al), copper (Cu), and/or iron (Fe) may still be included. The elements that have not yet been precipitated may be included in the first solution to be produced.

The transition metal extractant (TE) may include a phosphoric acid-based compound, a phosphonic acid-based compound, a phosphinic acid-based compound, and/or a carboxylic acid-based compound.

The process of extracting the transition metal by adding the transition metal extractant (TE) (S550) may be performed while sequentially increasing the pH. In an embodiment, while maintaining the pH in a range of about 3 to about 4, di-(2-ethylhexyl)phosphoric acid (D2EHPA) may be added to extract manganese (Mn). Afterwards, sodium hydroxide (NaOH) may be added to adjust the pH to a range of about 4 to about 5, and then bis(2,2,4-trimethylpentyl)phosphinic acid (Cyanex272) may be added to extract cobalt (Co). After that, sodium hydroxide (NaOH) may be added to adjust the pH to a range of about 5 to about 6, and then 2-ethylhexyl 2-ethylhexyphosphonic acid (PC88A) may be added to extract nickel (Ni).

Instead of the transition metal extractant (TE), a saponified transition metal extractant may be used. The mechanism of extracting the transition metal with the transition metal extractant (TE) may be that the hydrogen ion of the transition metal extractant (TE) is substituted with the transition metal ion, and the substituted transition metal ion and the anion of the transition metal extractant (TE) combine. In this case, since the hydrogen ion separated from the transition metal extractant (TE) lowers the pH of the solution, the above-described transition metal extraction may not be easy while sequentially increasing the pH. Therefore, for supplementation, a saponified transition metal extractant in which the hydrogen ion of the transition metal extractant (TE) is substituted with a sodium ion may be used.

Even after the transition metal is extracted by adding the transition metal extractant (TE), transition metal elements that have not yet been precipitated may still be included. In an embodiment, small amounts of aluminium (Al), copper (Cu), and/or iron (Fe) may still be included. The elements that have not yet been precipitated may be included in the first solution to be prepared.

In the method for preparing the first solution described above, the obtaining of lithium phosphate (Li₃PO₄) precipitated by adding sodium phosphate (Na₃PO₄) and then filtering (S570), or the removing of the precipitated iron phosphate (FePO₄) by adding ferric sulfate (Fe₂(SO₄)₃) and then filtering (S590) may be omitted.

Referring to FIG. 14 again, the second washing fluid recovered by the method according to embodiments of the present invention described above, i.e., the second solution, may include lithium hydroxide (LiOH) and/or lithium carbonate (Li₂CO₃) (S600). The second solution may further include sodium hydroxide (NaOH). The mass of lithium relative to the total mass of the second solution may be about 3,500 ppm or more.

The pH of the second solution may be may not be about 10 to about 15. This basic pH may be due to lithium hydroxide (LiOH) and/or lithium carbonate (Li₂CO₃) present in the second solution.

In the step of producing a positive electrode active material by calcining a mixture of a transition metal precursor and a lithium precursor, the lithium precursor may be a lithium precursor extracted according to the method of extracting a lithium precursor of the present invention. That is, the waste liquid generated in the process of washing the positive electrode active material produced using the lithium precursor extracted according to the present invention, may be used again as a raw material for producing the second solution of the present invention.

The first solution may be added to the second solution to produce a third solution (S700). The addition of the second solution (S700) may be for removing impurity ions other than lithium ions from the first solution. In addition, the addition of the second solution (S700) may be for recovering lithium ions contained in the second solution as a lithium precursor without providing a separate process.

The addition of the second solution (S700) may be performed so that the weight of lithium contained in the third solution (weight of contained lithium/weight of the third solution) relative to the total weight of the third solution does not exceed about 3,000 ppm. In an embodiment, the addition of the second solution (S700) may be the addition of the second solution while maintaining the pH of the third solution in a range of about 7 to about 11. By adding the second solution while satisfying the lithium content condition, an environment in which precipitation of lithium ions is difficult but precipitation of ions other than lithium is easy may be obtained. Through this, by extracting impurity ions other than lithium ions while ensuring that the content of lithium ions is not reduced, the obtaining effect of a high-purity lithium precursor may be achieved later.

During adding the second solution to the first solution, precipitated solid impurities may be produced. The removing of precipitated solid impurities (S800) may be performed using a solid-liquid separation device such as a filter, a filter press, or a decanter (centrifuge).

The precipitated solid impurities may include those that are not precipitated in the step of adding sodium hydroxide (BS1) to the acidic solution in which the discarded lithium transition metal composite oxide (ML1) is dissolved and then removing the precipitate through filtration (S530). The precipitated solid impurities may include elements other than manganese (Mn), cobalt (Co), and nickel (Ni) in the transition metal. In an embodiment, the solid impurities may include iron (Fe), aluminium (Al), copper (Cu), zinc (Zn), magnesium (Mg), and/or calcium (Ca).

The precipitated solid impurities may include those that are not extracted from extracting transition metals from the acidic solution (S550) in which the above-described discarded lithium transition metal composite oxide (ML1) is dissolved and remain. In an embodiment, the precipitated solid impurities may include manganese (Mn), cobalt (Co), and/or nickel (Ni).

The precipitated solid impurities may include divalent and/or trivalent transition metals. In an embodiment, the precipitated solid impurities may include Al(OH)₃ and/or Co(OH)₂. The precipitation may occur because the second solution is alkaline. Hydroxide ions (OH-) derived from the second solution may combine with divalent and/or trivalent transition metal ions to form the precipitated solid impurities. Unlike the conventional methods for recovering general valuable metals, the present invention may reduce the use of alkaline solutions that cause environmental pollution by adding the second solution instead of a general alkaline solution.

A lithium precursor may be extracted (S900) from the third solution from which impurities have been removed. An alkaline carbonate may be added into the third solution from which the impurities have been removed, and then a lithium precursor in the form of lithium carbonate (Li₂CO₃) may be recovered through solid-liquid separation. In an embodiment, the alkaline carbonate may be sodium carbonate (Na₂CO₃). In an embodiment, the obtained lithium carbonate may be used as a raw material for a positive electrode active material containing nickel, in which the molar number of nickel is about 70% or less, about 60% or less, or about 50% or less compared to the molar number of metal elements other than lithium in the positive electrode active material.

An additional process may be performed to extract a lithium precursor in the form of lithium hydroxide (LiOH). The obtained lithium carbonate may be dispersed in an aqueous solution, and a hydroxide may be added into the aqueous solution. In an embodiment, calcium hydroxide (Ca(OH)₂) may be added as the hydroxide, calcium carbonate (CaCO₃) may be removed through solid-liquid separation, and a lithium precursor in the form of lithium hydroxide (LiOH) may be extracted through evaporation. The obtained lithium hydroxide may be used as a raw material for a high-nickel positive electrode active material in which the molar number of nickel is greater that about 50% of the molar number of metal elements excluding lithium in the positive electrode active material. In an embodiment, the high-nickel positive electrode active material may be LiNi_{0.8}Co_{0.15}Al_{0.05}O₂.

The lithium precursor obtained according to the present invention may be used as a raw material for producing a positive electrode active material. In an embodiment, the transition metal precursor used together as a raw material for producing a positive electrode active material may be a transition metal precursor of Chemical Formula 4 below.

[Chemical Formula 4] M9ᵢM10ⱼM11ₖM12ₗ(OH)₂

In Chemical Formula 4, 0≤i≤1, 0≤j≤1, 0≤k≤1, 0≤l≤1, i+j+k+l=1, and
each of M9, M10, M11, and M12 of Chemical Formula 4 is an element selected from Ni, Co, Al, Cu, Mn, Ti, Mo, Zn, Zr, Si, Ge, V, Cr, B, Mg, Na, Sr, Ag, Nb, Ga, Ca, or Ba.

Hereinafter, the present invention will be described in more detail through examples. However, the examples are intended to exemplify the present invention, and the scope of the present invention is not limited to the examples.

### Example

A washing fluid was prepared by recovering a second washing fluid. The second washing fluid was obtained by a method below.

Ni_{0.88}Co_{0.09}Al_{0.03}(OH)₂ and lithium hydroxide (LiOH) were mixed and then calcined to prepare positive electrode active material particles. A first washing fluid was added to the positive electrode active material particles and mixed. The first washing fluid contained cobalt sulfate (CoSO₄), sodium hydroxide (NaOH), and distilled water. As a result, the mixture contained a solid mixture and a liquid mixture.

The mixture was filtered to separate the liquid mixture, thereby obtaining a second washing fluid. The second washing fluid was recovered to obtain the washing fluid of the present invention.

### Comparative Example

A washing fluid was prepared by recovering a third washing fluid. The third washing fluid was discharged through a wastewater treatment process of the second washing fluid. The wastewater treatment process was carried out through a wastewater treatment device. The wastewater treatment device included a filtrate tank, an immersion bath, a sedimentation bath, a filter/filtering part, and a sludge treatment/discharge part.

### Experimental Example: Component Analysis

The components and contents of the washing fluids according to the Example and Comparative Example were analyzed by ICP. The results are shown in Table 1.

**[Table 1]**

| Division | Example | Comparative Example |
|---|---|---|
| Lithium (Li) content (ppm) | 4450 | 2660 |
| Sodium (Na) content (ppm) | 7483 or less | 3600 |
| Sulfate (SO₄) content (ppm) | 30000 or less | 86053 |

By using the method for recovering a washing fluid and the device for recovering the same according to an embodiment of the present invention, a washing fluid containing lithium in a high concentration may be recovered. In addition, a washing fluid containing no impurities or a trace amount thereof may be recovered, so that a washing fluid having high quality may be obtained.

Although the embodiments of the present invention have been described, it is understood that the present invention should not be limited to these embodiments but various changes and modifications can be made by one ordinary skilled in the art within the scope of the present invention as hereinafter claimed.

## Claims

1. A method for recovering a washing fluid, the method comprising:
synthesizing positive electrode active material particles comprising a nickel-containing lithium composite oxide;
injecting a first washing fluid to the positive electrode active material particles and mixing, the first washing fluid comprising a coating raw material, a precipitant, and a solvent;
filtering the mixture to separate a liquid mixture; and
recovering the separated liquid mixture,
wherein a concentration of lithium in the recovered washing fluid is about 3500 ppm or more.

2. The method for recovering a washing fluid of claim 1, wherein the positive electrode active material particle comprises a nickel-containing lithium composite oxide represented by the following Chemical Formula 1:
[Chemical Formula 1] Liₐ₁Niₓ₁M¹_{y1}M²_{z1}O_{2-b1}X_{b1}
in Chemical Formula 1, 0.9≤a1≤1.8, 0.8≤x1≤1, 0≤y1≤0.2, 0≤z1≤0.2, 0.9≤x1+y1+z1≤1.1, and 0≤b1≤0.1,
M¹ and M² are each independently one or more elements selected from the group consisting of Al, B, Ba, Ca, Ce, Co, Cr, Cu, Fe, Mg, Mn, Mo, Nb, Si, Sr, Ti, V, W, and Zr, and
X comprises one or more elements selected from the group consisting of F, P and S.

3. The method for recovering a washing fluid of claim 1 or claim 2, wherein the coating raw material comprises a cobalt compound.

4. The method for recovering a washing fluid of any one of claims 1 to 3, wherein the precipitant comprises sodium hydroxide.

5. The method for recovering a washing fluid of any one of claims 1 to 4, wherein the solvent comprises at least one of distilled water or an alkaline solution.

6. The method for recovering a washing fluid of any one of claims 1 to 5, wherein a concentration of lithium of the recovered washing fluid is about 3500 ppm to about 10000 ppm.

7. The method for recovering a washing fluid of any one of claims 1 to 6, wherein a concentration of impurities of the recovered washing fluid is about 20 ppm to about 30000 ppm.

8. A device for recovering a washing fluid, the device comprising a tank part, a valve part, a line part, and a pump part, and the device recovering a washing fluid using the recovering method described in any one of claims 1 to 7.

9. A washing fluid recovered by the recovering method described in any one of claims 1 to 7, the washing fluid having a lithium concentration of about 3500 ppm or more.
